(19) Europäisches Patentamt
European Patent Office
Office européen des brevets

(11) EP 1 078 953 B1

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
***C08L 21/00*** *(2006.01)*

(21) Anmeldenummer: **00116281.7**

(22) Anmeldetag: **10.08.2000**

(54) **Agglomerierte Kautschukgele enthaltende Kautschukmischungen und Vulkanisate**

Rubber composition comprising an agglomerate gel rubber and vulcansate thereof

Composition de caoutchouc comprenant un caouchouc sous forme de gel aggloméré et vulcanisat à base de cette composition

(84) Benannte Vertragsstaaten:
**DE FR GB IT**

(30) Priorität: **23.08.1999 DE 19939865**

(43) Veröffentlichungstag der Anmeldung:
**28.02.2001 Patentblatt 2001/09**

(73) Patentinhaber: **LANXESS Deutschland GmbH**
**51369 Leverkusen (DE)**

(72) Erfinder:
- **Obrecht, Werner, Dr.**
  **47447 Moers (DE)**
- **Jeske, Winfried**
  **51399 Burscheid (DE)**

(56) Entgegenhaltungen:
**EP-A- 0 854 170**
**EP-A- 0 854 171**
**EP-A- 0 978 531**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft anorganische Füllstoffe enthaltende agglomerierte Kautschukgele, hieraus hergestellte Kautschukmischungen und deren Verwendung. Die Vulkanisate, die diese agglomerierte Kautschukgele enthalten, zeichnen sich im Vergleich mit Compounds, die die entsprechenden nichtagglomerierten Gele enthalten, durch verbesserte mechanische Eigenschaften bei zumindest gleichem Dämpfungsverhalten aus. Kautschukmischungen mit "strukturierten" Kautschukgelen sowie Compounds auf der Basis kieselsäurehaltiger agglomerierter Kautschukgele, die mit schwefelhaltigen Siliciumverbindungen aktiviert sind, weisen besonders vorteilhafte mechanische Eigenschaften auf.

Der Verwendung von Mikrogelen in Kautschukcompounds wird in folgenden Patentanmeldungen bzw. Patenten beschrieben: EP-A 405216, DE-A 4220563, GB-PS 1078400 und LeA 32 158, EP 432 405 und EP 432 417. In den Patent(anmeldungen) EP-A 405 216, DE-A 4220 563 sowie in GB-PS 1078400 werden die Verwendung von CR-, BR- und NR-Mikrogelen für Mischungen mit doppelbindungshaltigen Kautschuken und für die Herstellung der entsprechenden Vulkanisate beansprucht. Die Vulkanisate sind insbesondere für die Herstellung von Reifenlaufflächen geeignet, da sie bei 70°C hohe Rückprallelastizitäten und damit einen niedrigen Rollwiderstand und bei 23°C niedrige Rückprallelastizitäten und damit eine hohe Naßrutschfestigkeit aufweisen. Insbesondere die große Differenz der Rückprallelastizitäten zwischen 70°C und 23°C ist charakteristisch für die mikrogelhaltigen Vulkanisate. Für den technischen Einsatz in Reifenlaufflächen sind die mechanischen Eigenschaften der mikrogelhaltigen Vulkanisate allerdings nicht ausreichend. Defizite bestehen insbesondere im Niveau der mechanischen Vulkanisateigenschaften. Hier besteht der Bedarf, das Produkt aus Spannungswerts bei 300% Dehnung und Reißdehnung sowie den Abriebwiderstand zu verbessern.

Eine besondere Rolle für die Aktivierung kieselsäurehaltiger Kautschukmischungen spielen schwefelhaltige Organosiliciumverbindungen. Beispielhaft sind hier folgende Patentschriften genannt: US 3. 873. 489 vom 25. 05. 1975 (Degussa), US 4.709.065 vom 24. 11. 1987 (Shin-Etsu) und US 5.227.425 vom 13. 07. 1993 (Michelin), LeA 30206 vom 02.03.1994, LeA 31169 vom 27. 06. 1995, LeA 32283 vom 10. 03. 1997.

Dokument D3 beschreibt eine Kautschukmischung für Reifen, die zumindest einen doppelbindungshaltigen Kautschuk, 10 bis 110 phr eines Kautschukgels und eine siliciumorganische Schwefelverbindung, der Struktur HS-R-$Si(OR)_3$, aufweist. Ein Kautschuklatex, die zum Beispiel aus SBR-latex besteht, ist durch Dicumylperoxide vernetzt. Danach wird der Latex abgekühlt und abfiltriert. Das Gel weist eine Partikelgröße von 3 bis 1000 nm und einen Quellungsindex in Toluol von 1 bis 15 auf. Kautschukgele sind durch eine breite Teilchengrößenverteilung, die größer als 25 nm ist, charakterisiert. Die Kautschukzusammensetzung von D3 enthält weiteren Zusatzstoffe wie Alterungsschutzmittel, Verarbeitungshilfsmittel und weiteren Füllstoffe.

Nicht gelehrt wird in diesen Patenten die Verbesserung der mechanischen Eigenschaften von Vulkanisaten auf der Basis von Kautschukgelen durch Verwendung agglomerierter mit anorganischen Füllstoffen wie Kieselsäure coagglomerierter Kautschukgele.

Es bestand daher die technische Aufgabe, das mechanische Werteniveau (Spannungswert (300% x Reißdehnung) sowie den Abriebwiderstand mikrogelhaltiger Kautschukvulkanisate zu verbessern, ohne die Differenz der Rückprallelastizitäten bei 70°C und 23°C zu verschlechtern.

Es wurde jetzt gefunden, daß es gelingt, die verstärkende Wirkung von Kautschukgelen in Vulkanisaten zu verbessern, wenn die Kautschukgele in agglomerierter Form eingesetzt werden und anorganische Füllstoffe enthalten. Die verstärkende Wirkung der agglomerierten Kautschukgele ist dann besonders gut ausgeprägt, wenn die Teilchen nach der Agglomeration nicht die thermodynamische günstigste Kugelform annehmen können, d. h. wenn die agglomerierten Teilchen eine gewisse Struktur besitzen. Insbesondere die Verwendung von Kautschukgelen, die mit anorganischen Füllstoffen wie Kieselsäure coagglomeriert werden, ist besonders günstig. Die verstärkende Wirkung der kieselsäurehaltigen Kautschukgele wird dadurch weiter verbessert, daß bei der Compoundierung zusätzlich eine schwefelhaltige Organosiliciumverbindung verwendet wird.

Gegenstand der Erfindung sind daher Kautschukmischungen enthaltend mindestens ein anorganische Füllstoffe enthaltendes agglomeriertes Kautschukgel (A), mindestens einen doppelbindungshaltigen Kautschuk (B) und mindestens eine schwefelhaltige Organosiliciumverbindungen (C), wobei der Anteil an doppelbindungshaltigem Kautschuk (B) 100 Gew.-Teile, der

Anteil an Kautschukgel (A) 1 bis 150 Gew.-Teile, bevorzugt 10 bis 100 Gew.-Teile, und der Anteil an siliciumorganischer Schwefelverbindung (C) 0,2 bis 20, bevorzugt 1 bis 10, Gew.-Teile beträgt, sowie weiteren Kautschukhilfsmitteln und gegebenenfalls weiteren Füllstoffen.

Unter agglomerierten Kautschukgelen (A) versteht man Kautschukgele mit Teilchendurchmessern von 5 bis 5.000 nm. Sie besitzen eine breite Teilchengrößenverteilung, charakterisiert durch die Differenz der $d_{80}$-$d_{10}$ Werte, die größer als 25 nm ist. Die charakteristischen Durchmesser $d_{10}$ und $d_{80}$ sind die Durchmesser, unter denen jeweils 10 oder 80 Gew.% der Teilchen liegen. Die Teilchengrößenverteilungen werden mittels Ultrazentrifagation nach H. Lange, "Schnelle Dichtegradientenzentrifugation dispergierter Teilchen", Colloid & Polymer Sci. 258, 1077-1085 (1980) bzw. H. G. Müller, "Automated determination of particle-size distributions of dispersions by analytical ultracentrifugation", Colloid & Polymer Science 267: 113-116 (1989) bestimmt.

In den Fällen, in denen die agglomerierten Teilchen nach der Agglomeration nicht in Kugelform vorliegen und "Struktur" besitzen, kann dies mit geeigneten Methoden z.B. mit der Elektronenmikroskopie nachgewiesen werden.

Die Kautschukgele sind aufgrund ihrer Vernetzung unlöslich und in geeigneten Quellmitteln, wie Toluol, quellbar. Die Quellungsindizes der Mikrogele ($Q_i$) in Toluol betragen 1-15, vorzugsweise 1-10. Der Quellungsindex wird aus dem Gewicht des lösungsmittelhaltigen Gels (nach Zentrifugation mit 20.000 Upm) und dem Gewicht des trockenen Gels berechnet:

$$Q_i = \text{Naßgewicht des Gels/Trockengewicht des Gels.}$$

Zur Ermittlung des Quellungsindex läßt man z.B. 250 mg Gel in 25 ml Toluol 24 h unter Schütteln quellen. Das Gel wird abzentrifugiert und gewogen und anschließend bei 70 °C bis zur Gewichtskonstanz getrocknet und nochmals gewogen.

Die agglomerierten Kautschukgele enthalten anorganische Füllstoffe insbesondere Kieselsäure, in Mengen von ca. 3 bis 80 Gew.%, bevorzugt 5 bis 50 Gew.-%, wobei die füllstoffhaltigen Kautschukgele aufgrund ihres Füllstoffgehaltes niedrigere Quellungsindices besitzen. Bezieht man in diesen Fällen die Quellungsindices auf die reine Kautschukkomponente des füllstoffhaltigen Gels so liegt sie in dem oben angegebenen Bereich.

Für die Herstellung der Kautschukgele verwendet man insbesondere folgende Kautschuke:

BR: Polybutadien,
ABR: Butadien/Acrylsäure$C_1$-$C_4$-Alkylestercopolymere,
IR: Polyisopren,
SBR: Styrol-Butadien-Copolymerisate mit Styrolgehalten von 1-60, vorzugsweise 2-50 Gewichtsprozent,
X-SBR: carboxlylierte Styrol-Butadien-Copolymerisate
FKM: Fluorkautschuk,
ACM: Acrylatkautschuk,
NBR: Polybutadien-Acrylnitril-Copolymerisate mit Acrylnitrilgehalten von 5-60, vorzugsweise 10-50 Gewichtsprozent,
X-NBR: carboxlierte Nitrilkautschuke
CR: Polychloropren
IIR: Isobutylen/Isopren-Copolymerisate mit Isoprengehalten von 0,5-10 Gewichtsprozent,
BIIR: bromierte Isobutylen/Isopren-Copolymerisate mit Bromgehalten von 0,1-10 Gewichtsprozent,
CIIR: chlorierte Isobutylen/Isopren-Copolymerisate mit Bromgehalten von
0,1-10 Gewichtsprozent,
HNBR: teil- und vollhydrierte Nitrilkautschuke
EPDM: Ethylen-Propylen-Dien-Copolymerisate,
EAM: Ethylen/Acrylatcopolymere,
EVM: Ethylen/Vinylacetatcopolymere
ECO: Epichlorhydrinkautschuk,
Q: Silikonkautschuke,
AU: Polyesterurethanpolymerisate,
EU: Polyetherurethanpolymerisate
ENR: Epoxydierter Naturkautschuk oder Mischungen davon

Die Herstellung der unvernetzten Kautschuk-Ausgangsprodukte erfolgt durch folgende Methoden:

1. Emulsionspolymerisation
2. Lösungspolymerisation von Kautschuken, die über Variante 1 nicht zugänglich sind,
3. Außerdem können natürlich vorkommende Latices wie z.B. Naturkautschuklatex eingesetzt werden.

Bei der Herstellung von Mikrogelen durch Emulsionspolymerisation werden folgende radikalisch polymerisierbare Monomere eingesetzt: Butadien, Styrol, Acrylnitril, Isopren, Ester der Acryl- und Methacrylsäure, Tetrafluorethylen, Vinylidenfluord, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure etc., doppelbindungshaltige Hydroxy-verbindungen wie z.B. Hydroxyethylmethacrylat, Hydroxyethylacrylat, Hydroxybutylmeth-acrylat etc. oder doppelbindungshaltige Epoxide wie beispielsweise Glycidylmethacrylat oder Glycidylacrylat. Die Vernetzung des Kautschukgels kann direkt während der Emulsionspolymerisation durch Copolymerisation mit vernetzend wirkenden multifunktionellen Verbindungen erreicht

werden. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallyl-cyanurat, Triallylisocyanurat, 1,2-Polybutadien, N,N'-m-Phenylenmaleimid, 2,4-Toluylenbis-(maleimid) und/oder Triallyltrimellitat. Darüber hinaus kommen in Betracht die Acrylate und Methacrylate von mehrwertigen, vorzugsweise 2 bis 4-wertigen $C_2$ bis $C_{10}$ Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethlolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschukgelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Herstellung stark- und- oder auch schwach vernetzter Polymerer im Anschluß an die Emulsionspolymerisastion setzt man am besten die Latices ein, die bei der Emulsionspolymerisation erhalten werden. Auch Naturkautschuklatices können auf diese Weise vernetzt werden. Die Methode kann auch auf wässrige Polymerdispersionen angewandt werden, die durch Umlösung der Kautschuke aus organischen Lösungen zugänglich sind. Prinzipiell kann diese Methode auch bei nichtwässrigen Polymerdispersionen angewandt werden.

Geeignet vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymer-captoverbindungen, wie Dimercaptoethan, 1,6-Dimercaptohexan, 1,3,5-Trimercaptotriazin und mercaptoterminierte Polysulfidkautschuke wie mercaptoterminierte Umsetzungsprodukte von bis-Chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmitteln, beispielsweise Organometallhydridkomplexe erfolgen.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus. Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmitteln wie z.B. Tensiden mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschrieben, vor. Als Vernetzer eignen sich die zuvor genannten Verbindungen, wobei man das für die Herstellung der Dispersion eingesetzte Lösungsmittel gegebenenfalls vor der Vernetzung z.B. destillativ entfernen kann.

Die Agglomeration der Kautschuklatices bzw. der Kautschukgele kann auf unterschiedliche Weise durchgeführt werden. Prinzipiell geeignet sind chemische und physikalische Agglomerationsmethoden (W. Obrecht in Ullmann's Encyclopedia Of Industrial Chemistry, VCH Verlagsgesellschaft mbH, D-69451 Weinheim, 1993, Vol A23, Rubber , 3. Synthetic, S. 263).

Führt man die Agglomeration von nicht oder schwachvernetzten Kautschuklatices durch, so nehmen diese nach der Agglomeration die thermodynamisch günstigste Kugelform an. Setzt man stärker vernetzte Kautschukgele (Vorvernetzung) bei der Agglomeration ein, die im agglomerierten Zustand aufgrund ihrer Vorvernetzung keine Kugelform annehmen könen, so erhält man agglomerierte Kautschukgele mit Struktur. Für die Herstellung agglomerierter Gele mit Struktur hat es sich bewährt, daß man von vorvernetzten Gelen ausgeht, eine Agglomeration durchführt und nach der Agglomeration eine weitere Vernetzung (Nachvernetzung) durchführt. Für die Vor- und Nachvernetzung der Kautschukgele eignen sich die zuvor beschriebenen Methoden.

Für die Herstellung füllstoffhaltiger Kautschukgele geht man zweckmäßigerweise von un- bzw. vorvernetzten Kautschuklatices aus, die man mit einer wässrigen Disperison des anorganischen Füllstoffs mischt, und den Kautschuk in Gegenwart des anorganischen Füllstoffs agglomeriert. Nach der Coagglomeration führt man zweckmäßigerweise eine weitere Vernetzung der Kautschukkomponente (Nachvernetzung) durch. Durch die Coagglomeration/Nachvernetzung werden der anorganische Füllstaoff und das Kautschukgel physikalisch/chemisch fixiert, so daß bei der anschließenden Isolation des Coagglomerats aus der wässrigen Phase nahezu keine Verluste insbesondere bei feinteiligen anorganischen Komponenten mit spezifischen Oberflächen größer $100m^2/g$ auftreten. Dies lässt sich gut mit Hilfe der

Aschegehalte der Kautschukgele überprüfen.

Für die Herstellung der füllstoffhaltigen Kautschukgele kommen z.B. folgende anorganischen Füllstoffe infrage: Ruß, Kieselsäure, Calciumcarbonat, Magnesiumcarbonat, Dolomit, Bariumsulfat, Aluminiumsilikate, Aluminiumoxid und/oder Zinkoxid, bevorzugt Kieselsäure.

Die Disperisonen der anorganischen Füllstoffe in Wasser stellt man entweder durch feine Verteilung (Mahlen) in Gegenwart geeigneter Tenside oder durch Ausfällen in Gegenwart geeigneter Hilfsmittel, wie anionische oder kationische Tenside, her.

Kommerziell erhältlich sind z.B. folgende wässrige Dispersionen anorganischer Füllstoffe: Wässrige Pigmentrußdispersionen der Degussa "Derussol®" (Geschäftsbereich Anorganische Industrieprodukte, D-60287 Frankfurt) und wässrige Kieselsäuredispersionen "Levasil®" der Bayer AG, D-5090 Leverkusen.

Die coagglomerierten Kautschukgele enthalten anorganische Füllstoffe in Mengen von 3-80 Gew.%.

Unter doppelbindungshaltigem Kautschuk (B) versteht man die Kautschuke, die nach DIN/ISO 1629 als als R-Kautschuke bezeichnet werden. Diese Kautschuke haben in der Hauptkette eine Doppelbindungen. Hierzu gehören z.B.:

| | |
|---|---|
| NR: | Naturkautschuk |
| SBR: | Styrol/Butadienkautschuk |
| BR: | Polybutadienkautschuk |
| NBR: | Nitrilkautschuk |
| IIR: | Butylkautschuk |
| HNBR: | Hydrierter Nitrilkautschuk |
| SNBR: | Styrol/Butadien/Acrylnitril-Kautschuk |
| CR: | Polychloropren |
| XSBR: | carboxylierter Styrol/Butadien-Kautschuk |
| XNBR: | Carboxylierter Butadien/Acrylnitril-Kautschuk |
| ENR: | Epoxydierter Naturkautschuk |
| ESBR: | Epoxydierter Styrol/Butadien-Kautschuk |

Unter doppelbindungshaltigen Kautschuken sollen aber auch Kautschuke verstanden werden, die nach DIN/ISO 1629 M-Kautschuke sind und neben der gesättigten Hauptkette Doppelbindungen in Seitenketten aufweisen. Hierzu gehört z.B. EPDM.

Die schwefelhaltigen Organosiliciumverbindungen (C) haben folgende Grundstrukturen:

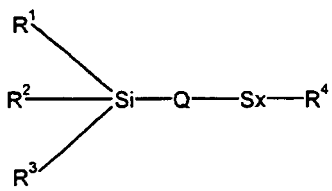

oder

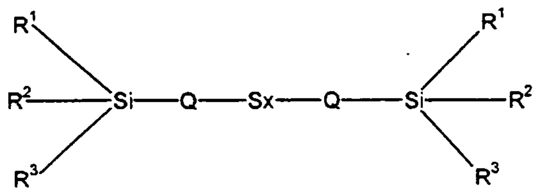

wobei

$R^1$, $R^2$ und $R^3$ für Alkoxygruppen mit 1 bis 20 C-Atomen stehen,

X für ganze Zahlen von 2 bis 8 steht,

Q eine Spacergruppe mit Strukturelementen auf der Basis von aliphatischen, heteroaliphatischen, aromatischen

und heteroaromatischen Kohlenstoffketten, mit 1 bis 20 C-Atomen und 1 bis 3 Heteroatomen, wie N, S, O ist und

$R^4$ eine Gruppe, die sich insbesondere in sogenannten Vulkanisationsbeschleunigem findet, darstellt, beispielsweise:

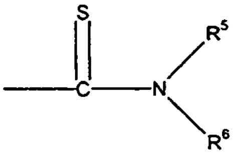 , 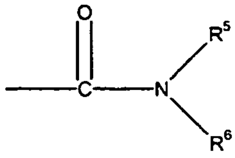 , 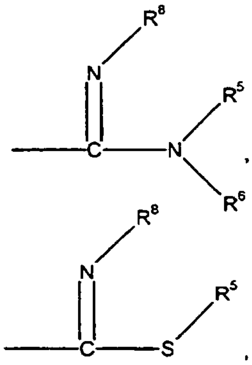 ,

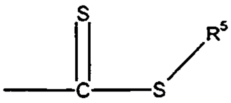 , 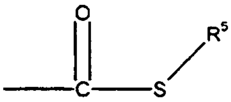 , ,

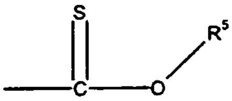 , 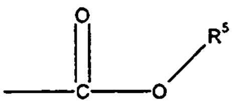 , 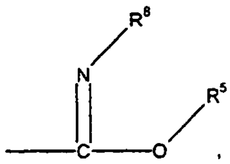 ,

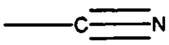 , 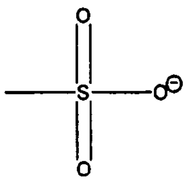 , 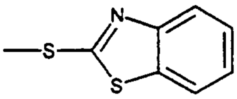 ,

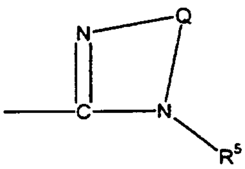 , 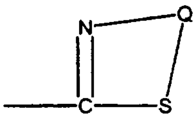 , 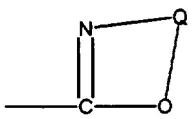 ,

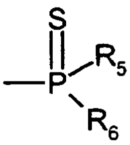

wobei $R^5$, $R^6$ und $R^8$ für $C_1$-$C_{10}$-Alkyl, $C_6$-$C_{10}$-Aryl sowie $C_7$-$C_{12}$-Aralkyl stehen und Q die obige Bedeutung hat.

Die bevorzugte schwefelhaltige Organosiliciumverbindung ist das nachstehend formelmäßig dargestellte Bis (tri-ethoxy-silyl-propyl-disulfan). Ein derartiges Produkt ist als Si 69 der Fa. Degussa kommerziell verfügbar:

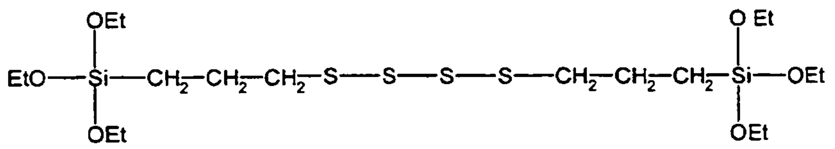 .

Die erfindungsgemäßen Kautschukmischungen aus agglomeriertem Kautschukgel (A), doppelbindungshaltigem Kautschukl (B) und schwefelhaltiger Organosiliciumverbindung (C) können zusätzliche weitere Komponenten wie Füllstoffe enthalten.

Besonders geeignete Füllstoffe zur Herstellung der erfindungsgemäßen Kautschukmischungen und -vulkanisate sind

- Ruße. Die hierbei zu verwendenden Ruße sind nach dem Flammruß-, Furnace- oder Gasrußverfahren hergestellt und besitzen BET-Oberflächen von 20-200 $m^2/g$ wie z.B: SAF-, ISAF-, IISAF-, HAF-, FEF- oder GPF-Ruße.

- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 $m^2/g$ (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen.

- synthetische Silikate, wie Aluminiumsilikat, Erdalkalisilikat, wie Magnesiumsilikat oder Calciumsilikat mit BET-Oberflächen von 20-400 $m^2/g$ und Primärteilchendurchmessern von 5-400 nm.

- natürliche Silikate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Calciumcarbonat, Magnesiumcarbonat, Zinkcarbonat.

- Metallsulfate, wie Calciumsulfat, Bariumsulfat.

- Metallhydroxide, wie Aluminiumhydroxid und Magnesiumhydroxid.

- Glasfasern und Glasfaserprodukte (Latten, Stränge oder Mikroglaskugeln).

- Thermoplastfasern (Polyamid, Polyester, Aramid).

Die genannten Füllstoffe können allein oder im Gemisch eingesetzt werden. In einer besonders bevorzugten Ausführung des Verfahrens werden 10-100 Gewichtsteile Kautschukgel (A), ggf. zusammen mit 0,1-100 Gewichtsteilen Ruß und/oder 0,1-100 Gewichtsteilen hellen Füllstoffen, jeweils bezogen auf 100 Gewichtsteile unvernetzten Kautschuks eingesetzt.

Die erfindungsgemäßen Kautschukmischungen können weitere Kautschukhilfsmittel enthalten, wie z.B. Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie beispielsweise Triethanolamin, Polyethylenglykol, Hexantriol, Bis-(triethoxisilylpropyl)-Tetrasulfid oder anderen, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1-50 Gewichtsprozent, bezogen auf eingesetzte Mengen an Kautschuk (B).

Als übliche Vernetzer können Schwefel, Schwefelspender, Peroxide oder Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylen-maleimid und/oder Triallyltrimellitat verwendet werden. Darüber hinaus kommen in Betracht die Acrylate und Metacrylate von mehrwertigen, vorzugsweise 2 bis 4-wertigen $C_2$ bis $C_{10}$ Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure, und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole, -sulfenamide, Guanidine, Thiurame, Dithiocarbamate, Thioharnstoffe und Thiocarbonate sowie Dithiophosphate. Die Vulkanisationsbeschleuniger, Schwefel und Schwefelspender oder Peroxide oder weitere Vernetzungsmittel wie beispielsweise dimeres 2,4-Toluyliden-di-isocyanat (= Desmodur TT) oder 1,4-bis-1-ethoxyhydrochinon (= Vernetzer 30/10)werden in Mengen von 0,1-40 Gewichtsprozent, bevorzugt 0,1 -10 Gewichtsprozent, bezogen auf die gesamte Menge an Kautschuk (B) eingesetzt. Die Vulkanisation der erfindungsgemäßen Kautschukmischungen kann bei Temperaturen von 100 bis 250°C, bevorzugt 130 bis 180°C, ggf. unter Druck von 10 bis 200 bar erfolgen.

Die erfindungsgemäßen Mischungen aus anorganische Füllstoffe enthaltendem agglomeriertern Kautschukgel (A), doppelbindungshaltigem Kautschuk (B) und schwefelhaltiger Organosiliciumverbindung (C) können auf verschiedene Arten hergestellt werden.

Zum einen ist es selbstverständlich möglich, die festen Einzelkomponenten zu mischen. Dafür geeignete Aggregate sind beispielsweise Walze, Innenmischer oder auch Mischextruder. Aber auch das Mischen durch Vereinigen der Latices der unvernetzten oder auch der vernetzen Kautschuke ist möglich. Isolierung der so hergestellten erfindungsgemäßen Mischung kann wie üblich, durch Eindampfen, Ausfällen oder Gefrierkoagulation (vgl. US-PS-2.187.146) erfolgen. Durch Einmischen von Füllstoffen in die Latexmischung und anschließende Aufarbeitung können die erfindungsgemäßen Mischungen direkt als Kautschuk-/Füllstoff-Formulierung erhalten werden. Der Zusatz weiterer Mischungsbestandteile zur Kautschukmischung aus agglomeriertern Kautschukgel (A), unvernetztem Kautschuk (B) und schwefelhaltiger Organosiliciumverbindung (C) wie zusätzlichen Füllstoffen sowie ggf. Kautschukhilfsmitteln erfolgt in üblichen Mischaggregaten, Walzen, Innenmischer oder auch Mischextrudern. Bevorzugte Mischtemperaturen liegen bei 50 bis 180°C.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen sowie Membranen.

## Beispiele

### Herstellung der Kautschukgel enthaltenden NR-Masterbatches

Die NR-Masterbatches der Kautschukgele werden ausgehend von Baystal 1357 der Polymer Latex GmbH (früher: Bayer France, Port Jérôme) in folgenden Reaktionsschritten hergestellt:

Vorvernetzung mit Dicumylperoxid
Homo-Agglomeration bzw. Coagglomeration mit Kieselsolen
Nach- bzw. Vernetzung mit Dicumylperoxid
Aufarbeitung als Naturkautschuk-Masterbatch

Für die Vorvernetzung mit Dicumylperoxid (DCP) wird eine Baystal 1357-Latexpartie mit einem Styrolgehalt von 25 Gew.% auf eine Feststoffkonzentration von 30 Gew.% verdünnt und in einen Autoklaven gefüllt. DCP wird in fester Form bei Raumtemperatur zugegeben (0,1 phr bezogen auf Festprodukt). Durch Aufheizen des Latex auf 60°C wird das DCP aufgeschmolzen und unter Rühren gut im Latex verteilt. Zur Entfernung von Sauerstoff wird der Reaktorinhalt bei 60°C unter Rühren evakuiert und Stickstoff aufgepresst. Der Evakuierungs/N2-Begasungszyklus wird 3 mal wiederholt. Danach wird der Reaktor auf 150°C aufgeheizt. Um Latexanbackungen beim Aufheizen zu vermeiden, wird darauf geachtet, daß die Differenz zwischen Mantel- und Innentempertur 10°C nicht übersteigt. Nach dem Aufheizen wird die Innentemperatur 45 Min. bei mindestens 150°C gehalten. Danach wird der Latex abgekühlt und über ein Monodurtuch filtriert. Durch die Vorvernetzung mit DCP wird die Teilchengröße des Latex praktisch nicht beeinflußt ($d_{10}$ = 53 nm, $d_{50}$ = 58 nm und $d_{80}$= 63 nm). Der Gelgehalt steigt von 75 auf 94 Gew. % und die Dichte von 0,928 auf 0,935 g/$cm^3$ ; der Quellungsindex nimmt von 61 auf 17 ab und die Glastemperatur steigt geringfügig von -57 auf -56°C.

Die Homo-Agglomeration der Latices wird in einem Gaulin-Hochdruckhomogenisator, Typ: LAB 100 (A.P.V. Schröder GmbH Lübeck, Mecklenburger Strasse 223) durchgeführt. Für die Agglomeration werden die Latices auf die in den Tabellen aufgeführten Feststoffgehalte verdünnt. Die Agglomeration wird bei Raumtemperatur durchgeführt. Variiert wird der Agglomerationsdruck und die Zahl der Durchgänge durch den Homogenisator, wobei die Latices sowohl im Anlieferungszustand, d.h. ohne DCP-Vorvernetzung als auch nach Vorvernetzung mit 0,1 phr DCP agglomeriert werden.

Die Co-Agglomeration der vorvernetzten Latices mit Kieselsolen wird durchgeführt, indem im ersten Schritt die wässrigen Latices mit den wässrigen Kieselsolen in den später angeführten Mengenverhälnissen gemischt und im zweiten Schritt im Hochdruckhomogenisator gemeinsam agglomeriert werden.

Es werden die Kieselsole Levasil 200 und Levasil Versuchsprodukt AC 4055 eingesetzt. Diese Produkte der

Bayer AG Leverkusen weisen folgende charakteristische Daten auf:

| | Feststoffgehalt [Gew.%] | PH-Wert (20°C) | Dichte (20°C) [g/cm$^3$] | Viskosität (20°C) [mPa.s] | $Na_2O$-Gehalt [Gew.%] | Spez. Oberfläche [m$^2$/g] |
|---|---|---|---|---|---|---|
| Levasil 200 | 30,1 | 9,0 | 1,205 | 4,61 | 0,148 | 203 |
| Levasil Versuchsprodukt AC 4055 | 15,5 | 9,2 | 1,099 | 2,53 | 0,107 | 432 |

Die Nachvernetzung mit Dicumylperoxid (DCP) wird wie bei der Vorvernetzung mit DCP beschrieben mit den in den folgenden Tabellen aufgeführten Mengen durchgeführt.

Die Aufarbeitung der als Latex vorliegenden Kautschukgele erfolgt als Masterbatch mit Naturkautschuk. Hierzu werden die wässrigen Disperisonen der Kautschukgele mit Naturkautschuklatex im Verhältnis 50/50 (bezogen auf Feststoff) gemischt und als Festprodukt aus der wässrigen Phase isoliert.

Hierzu werden jeweils 5 kg des so behandelten SBR-Kautschuk-Latex mit einem Feststoffgehalt von 30 Gew. % werden in eine Mischung aus 5 kg Naturkautschuklatex mit einem Feststoffgehalt von 30 Gew.%, 300 g einer 5%igen wäßrigen Harzseifenlösung (Dresinate 731, Hersteller: Hercules) und 150 g einer 10%igen wäßrigen Dispersion des Alterungsschutzmittels Vulkanox 4020 (Hersteller: Bayer AG) eingerührt. Die erhaltene Latexmischung enthält vernetzten Kautschuk und Naturkautschuk im Gewichtsverhältnis 1:1.

Zur Fällung von 3 kg Kautschukmischung werden 10,45 kg der Latexmischung bei 65°C in eine Lösung von 225 g NaCl, 40,8 g $Al_2(SO_4)_3$ x 18 $H_2O$, 4,5 g Gelatine in 30 l Wasser eingerührt, wobei der pH-Wert durch Zugabe von 10%iger $H_2SO_4$ bei 4 gehalten wird. Das Produkt wird gründlich mit Wasser gewaschen und 2 Tage bei 70°C im Vakuum getrocknet.

Man erhält einen Masterbatch bestehend aus 50 Gew.% SBR-Kautschukgel, das gegebenenfalls auch Kieselsäure enthält, mit 50 Gew.% Naturkautschuk.

Nachfolgend wird die Herstellung der bei den verschiedenen Mischungsserien eingesetzten Kautschukgele beschrieben. Außerdem sind auch die analytischen Daten dieser Gele in den Tabellen zusammengefasst.

Gele der Mischungsserie 1):

| Gel-Nr. | Gel (1) | Gel (2) | Gel (3) | Gel (4) |
|---|---|---|---|---|
| Styrol-Gehalt [Gew.%] | 22,5 | 22,5 | 22,5 | 22,5 |
| Vorvernetzung mit DCP [phr] | - | - | - | - |
| Feststoffgehalt [Gew.%] | 30 | 20 | 27,5 | 30 |
| Agglomerationsdruck [bar] | - | 200 | 0 | 200 |
| Zahl der Durchgänge [n] | - | 1 | 0 | 1 |
| Nachvernetzung mit DCP [phr] | 1,0 | 1,0 | 1,5 | 1,5 |
| $D_{10}$ [nm] | 53 | 62 | 54 | 64 |
| $D_{50}$ [nm] | 59 | 405 | 59 | 395 |
| $D_{80}$ [nm] | 63 | 798 | 63 | 743 |
| Dichte der Latexteilchen [g/cm$^3$] | 0,962 | 0,958 | 0,971 | 0,973 |
| Gelgehalt [Gew.%] | 96 | 98 | 97 | 98 |
| Quellungsindex | 7,7 | 6,0 | 6,4 | 4,4 |
| Glastemperatur [°C] | -38 | -39,5 | -30,5 | -27,5 |

Gele der Mischungsserie 2):

| Gel-Nr. | Gel (5) | Gel (6) | Gel (7) | Gel (8) |
|---|---|---|---|---|
| Styrol-Gehalt [Gew.%] | 24,8 | 24,8 | 24,8 | 24,8 |
| Vorvernetzung mit DCP [phr] | - | 0,1 | 0,1 | 0,1 |
| Feststoffgehalt [Gew.%] | - | 29,7 | 29,7 | 29,7 |
| PH-Wert | - | 9,7 | 9,7 | 9,7 |
| Agglomerationsdruck [bar] | - | 100 | 100 | 300 |
| Zahl der Durchgänge [n] | - | 1 | 5 | 5 |
| Nachvernetzung mit DCP [phr] | 1,5 | 1,4 | 1,4 | 1,4 |
| $D_{10}$ [nm] | 48 | 57 | 59 | 314 |
| $D_{50}$ [nm] | 54 | 68 | 68 | 951 |
| $D_{80}$ [nm] | 58 | 82 | 95 | 1496 |
| Dichte der Latexteilchen [g/cm$^3$] | 0,981 | 0,987 | 0,980 | 0,981 |
| Gelgehalt [Gew.%] | 99 | 96 | 98 | 98 |
| Quellungsindex | 5,5 | 5,3 | 5,3 | 4,5 |
| Glastemperatur [°C] | -23,5 | -26,5 | -25,5 | -25 |

Gele der Mischungsserien 3) und 4):

| Gel-Nr. | Gel (9) | Gel (10) | Gel (11) | Gel (12) | Gel (13) | Gel (14) | Gel (15) |
|---|---|---|---|---|---|---|---|
| Styrol-Gehalt [Gew.%] | 22,5 | 22,5 | 22,5 | 22,5 | 22,5 | 22,5 | 22,5 |
| Vorvernetzung mit DCP [phr] | 0,1 | 0,1 | 0,1 | 0,1 | 0,1 | 0,1 | 0,1 |
| Kieselsol AC 4055 | 95/5 | 90/10 | 80/20 | 70/30 | | | |
| Levasil 200 | | | | | 90/10 | 80/20 | 70/30 |
| Feststoffkonzentration [Gew.%] | 27,5 | 27,5 | 25,4 | 23,5 | 30,3 | 30,8 | 31,6 |
| Agglomerationsdruck [bar] | 300 | 300 | 300 | 300 | 300 | 300 | 300 |
| Zahl der Durchgänge [n] | 5 | 5 | 5 | 5 | 5 | 5 | 5 |
| Nachvernetzung mit DCP [phr] | 1,4 | 1,4 | 1,4 | 1,4 | 1,4 | 1,4 | 1,4 |
| $D_{10}$ [nm] | | 90 | | | | | |
| $D_{50}$ [nm] | | 791 | | | | | |
| $D_{80}$ [nm] | | 1606 | | | | | |
| Aschegehalt des kieselsäurehaltigen Gels [Gew.%] | 5,0 | 9,6 | 19,5 | 28,6 | 10,1 | 19,6 | 28,9 |
| Aschegehalt des 50%igen NR-Masterbatch [Gew.%] | 2,6 | 5,4 | 10 | 15,2 | 5,2 | 10,1 | 14,9 |

**Compoundherstellung, Vulkanisation und Eigenschaften der Vulkanisate**

In der 1. Mischungsserie werden die Eigenschaften gelhaltiger Vulkanisate verglichen. Für den Vergleich werden nichtagglomerierte und agglomerierte SBR-Gele eingesetzt. Die Gele sind jeweils mit 1,0 und mit 1,5 phr DCP vernetzt und haben keine Struktur.

In der 2. Mischungsserie wird der Einfluß der unter verschiedenen Agglomerationsbedingungen erhaltenen agglomerierten Gelen mit Struktur auf die Vulkanisateigenschaften demonstriert.

In der 3. Mischungsserie wird der Einfluß von mit Kieselsäuren coagglomerierten SBR-Kautschukgelen auf die Vulkanisateigenschaften demonstriert, wobei bei der Compoundherstellung kein Kieselsäureaktivator eingesetzt wird.

In der 4. Mischungsserie wird der Einfluß von mit Kieselsäuren coagglomerierten SBR-Kautschukgelen auf die Vulkanisateigenschaften demonstriert, wobei bei der Compoundherstellung als Kieselsäureaktivator Si69 eingesetzt wird.

Für die Mischungsherstellung der Mischungsserien 1)- 3) werden die in den nachfolgenden Tabellen aufgeführten Mischungsbestandteile in der angegebenen Reihenfolge in einem Laborinnenmischer gemischt, wobei das Gel als 50%iger NR-Masterbatch zusammen mit einem Teil des Naturkautschuks eingearbeitet wird:

Nach dem Mischen werden die Compoundviskositäten bei 100°C (ML 1+4/100°C) und in der 3. Mischungsserie zusätzlich die Mooneyrelaxation bestimmt:

Die Vulkansiationsgeschwindigkeiten der Mischungen werden in einem Rheometerexperiment bei 160°C untersucht Auf diese Weise werden charakteristische Heizzeiten wie z.B. $t_{95}$ bestimmt. Für die Herstellung der Vulkanisate wird als Vulkansiationszeit $t_{95+5}$ gewählt. Die Vulkanisation wird bei 160°C durchgeführt.

Auf der Basis der nachfolgen aufgeführten Mischungen werden die nachfolgend zusammengestellten Prüfergebnisse erhalten.

<u>Mischungsserie</u>

| Mischungs-Nr.: | 1 | 2 | 3 | 4 |
|---|---|---|---|---|
| TSR 5, Defo 700 | 25 | 25 | 25 | 25 |
| Gel (1)/ NR-Masterbatch (50/50) | 150 | | | |
| Gel (2)/NR-Masterbatch (50/50) | | 150 | | |
| Gel (3)/NR-Masterbatch (50/50) | | | 150 | |
| Gel (4)/NR-Masterbatch (50/50) | | | | 150 |
| Renopal 450 | 3 | 3 | 3 | 3 |
| Antilux 654 | 1,5 | 1,5 | 1,5 | 1,5 |
| Stearinsäure | 3 | 3 | 3 | 3 |
| Zinkoxid | 3 | 3 | 3 | 3 |
| Vulkanox 4010 NA | 1 | 1 | 1 | 1 |
| Vulkanox HS | 1 | 1 | 1 | 1 |
| Schwefel | 1,6 | 1,6 | 1,6 | 1,6 |
| Vulkacit NZ | 1 | 1 | 1 | 1 |

| Mischungs-Nr.: | 1 | 2 | 3 | 4 |
|---|---|---|---|---|
| ML 1+4/100°C [ME] | 46 | 39 | 45 | 41 |

| Mischungs-Nr.: | 1 | 2 | 3 | 4 |
|---|---|---|---|---|
| Vulkanisationszeit [min] | 16,4 | 20 | 15,6 | 17,7 |

| Mischungs-Nr.: | 1 | 2 | 3 | 4 |
|---|---|---|---|---|
| Zugfestigkeit [MPa] | 20,5 | 17,1 | 21,4 | 20,1 |
| Bruchdehnung [%] | 521 | 550 | 520 | 529 |
| Spannungswert bei 100 % Dehnung [MPa] | 1,3 | 1,1 | 1,5 | 1,8 |
| Spannungswert bei 300 % Dehnung [MPa] | 5,3 | 6,9 | 6,9 | 9,2 |
| Härte Shore A, 23 °C | 49 | 47 | 52 | 55 |

| Mischungs-Nr.: | 1 | 2 | 3 | 4 |
|---|---|---|---|---|
| Härte Shore A, 70 °C | 46 | 46 | 48 | 51 |
| Rückprallelastizität, 23 °C ($E_{23}$) [%] | 55 | 60 | 50 | 54 |
| Rückprallelastizität, 70 °C ($E_{70}$) [%] | 69 | 73 | 66 | 70 |
| Abrieb/40 DIN 53516 [mm3] | 861 | 437 | 392 | 333 |
| $E_{70}$-$E_{23}$ [%] | 14 | 13 | 16 | 16 |
| $S_{300}$ x F | 2.761 | 3.795 | 3.588 | 4.867 |

2. Mischungsserie

| Mischungs-Nr.: | 5 | 6 | 7 | 8 |
|---|---|---|---|---|
| TSR 5, Defo 700 | 25 | 25 | 25 | 25 |
| Gel (5)/ NR-Masterbatch (50/50) | 150 | | | |
| Gel (6)/NR-Masterbatch (50/50) | | 150 | | |
| Gel (7)/NR-Masterbatch (50/50) | | | 150 | |
| Gel (8)/NR-Masterbatch (50/50) | | | | 150 |
| Antilux 654 | 1,5 | 1,5 | 1,5 | 1,5 |
| Stearinsäure | 3 | 3 | 3 | 3 |
| Zinkoxid | 3 | 3 | 3 | 3 |
| Vulkanox 4010 NA | 1 | 1 | 1 | 1 |
| Vulkanox HS | 1 | 1 | 1 | 1 |
| Schwefel | 1 | 1 | 1 | 1 |
| Vulkacit NZ | 2 | 2 | 2 | 2 |
| Vulkacit D | 0,5 | 0,5 | 0,5 | 0,5 |

| Mischungs-Nr.: | 5 | 6 | 7 | 8 |
|---|---|---|---|---|
| ML 1+4/100°C [ME] | 40 | 39 | 33 | 45 |

| Mischungs-Nr.: | 5 | 6 | 7 | 8 |
|---|---|---|---|---|
| Vulkanisationszeit [min] | 20 | 20 | 20 | 20 |

| Mischungs-Nr.: | 5 | 6 | 7 | 8 |
|---|---|---|---|---|
| Zugfestigkeit [MPa] | 22,8 | 22,4 | 22,3 | 19,1 |
| Bruchdehnung [%] | 560 | 540 | 535 | 585 |
| Spannungswert bei 100 % Dehnung [MPa] | 1,6 | 1,6 | 1,6 | 2,2 |
| Spannungswert bei 300 % Dehnung [MPa] | 7,0 | 7,7 | 8,0 | 10,3 |
| Härte Shore A, 23 °C | 55 | 56 | 54 | 59 |
| Härte Shore A, 70 °C | 50 | 50 | 50 | 55 |
| Rückprallelastizität, 23 °C [%] | 36 | 37 | 37 | 39 |
| Rückprallelastizität, 70 °C [%] | 63 | 63 | 67 | 68 |
| Abrieb/40 DIN 53516 [mm3] | 253 | 223 | 198 | 226 |
| $E_{70}$-$E_{23}$ [%] | 27 | 26 | 30 | 29 |
| $S_{300}$ x D | 3.920 | 4.158 | 4.280 | 6.026 |

3. Mischungsserie

| Mischungs-Nr.: | 9 | 10 | 11 | 12 | 13 | 14 | 15 |
|---|---|---|---|---|---|---|---|
| TSR 5, Defo 700 | 25 | 25 | 25 | 25 | 25 | 25 | 25 |
| Gel (9)/ NR-Masterbatch (50/50) | 150 | | | | | | |
| Gel (10)/NR-Masterbatch (50/50) | | 150 | | | | | |
| Gel (11)/NR-Masterbatch (50/50) | | | 150 | | | | |
| Gel (12)/NR-Masterbatch (50/50) | | | | 150 | | | |
| Gel (13)/NR-Masterbatch (50/50) | | | | | 150 | | |
| Gel (14)/NR-Masterbatch (50/50) | | | | | | 150 | |
| Gel (15)/NR-Masterbatch (50/50) | | | | | | | 150 |
| Antilux 654 | 1,5 | 1,5 | 1,5 | 1,5 | 1,5 | 1,5 | 1,5 |
| Stearinsäure | 3 | 3 | 3 | 3 | 3 | 3 | 3 |
| Zinkoxid | 3 | 3 | 3 | 3 | 3 | 3 | 3 |
| Vulkanox 4010 NA | 1 | 1 | 1 | 1 | 1 | 1 | 1 |

| Mischungs-Nr.: | 9 | 10 | 11 | 12 | 13 | 14 | 15 |
|---|---|---|---|---|---|---|---|
| Vulkanox HS | 1 | 1 | 1 | 1 | 1 | 1 | 1 |
| Schwefel | 1,6 | 1,6 | 1,6 | 1,6 | 1,6 | 1,6 | 1,6 |
| Vulkacit NZ | 1 | 1 | 1 | 1 | 1 | 1 | 1 |
| Vulkacit D | 0,5 | 0,5 | 0,5 | 0,5 | 0,5 | 0,5 | 0,5 |

| Mischungs-Nr.: | 9 | 10 | 11 | 12 | 13 | 14 | 15 |
|---|---|---|---|---|---|---|---|
| ML 1+4/100°C [ME] | 54 | 41,2 | 56,2 | 56,1 | 45,5 | 51,7 | 51,0 |
| MR 30 [%] | 2,2 | 3,6 | 5,0 | 5,9 | 2,6 | 3,9 | 3,8 |

| Mischungs-Nr.: | 9 | 10 | 11 | 12 | 13 | 14 | 15 |
|---|---|---|---|---|---|---|---|
| Vulkanisationszeit t 95+5 [min] | 18 | 15,7 | 16,7 | 15,9 | 16,8 | 14,3 | 14,9 |

| Mischungs-Nr.: | 9 | 10 | 11 | 12 | 13 | 14 | 15 |
|---|---|---|---|---|---|---|---|
| Zugfestigkeit [MPa] | 21,6 | 19,6 | 22,1 | 25,1 | 19,6 | 21,3 | 22,8 |
| Bruchdehnung [%] | 500 | 620 | 570 | 645 | 535 | 525 | 555 |
| Spannungswert bei 100 % Dehnung [MPa] | 2,1 | 1,6 | 1,9 | 1,6 | 1,4 | 1,8 | 1,9 |
| Spannungswert bei 300 % Dehnung [MPa] | 11,2 | 7,6 | 8,7 | 7,2 | 8,5 | 9,3 | 9,2 |
| Härte Shore A, 23 °C | 59 | 58 | 63 | 64 | 54 | 57 | 62 |
| Härte Shore A, 70 °C | 54 | 54 | 55 | 54 | 52 | 54 | 55 |
| Rückprallelastizität, 23 °C [%] | 46 | 45 | 38 | 34 | 48 | 47 | 43 |
| Rückprallelastizität, 70 °C [%] | 64 | 68 | 57 | 51 | 70 | 68 | 62 |
| Abrieb/40 DIN 53516 [mm3] | 201 | 258 | 205 | 230 | 254 | 248 | 214 |
| Abrieb/60 DIN 53516 [mm3] | 131 | 202 | 172 | 203 | 239 | 236 | 194 |
| $E_{70}$-$E_{23}$ [%] | 18 | 23 | 19 | 17 | 22 | 21 | 19 |
| $S_{300}$ x D [Mpa x %] | 5.600 | 4.712 | 4.959 | 4.644 | 4.548 | 4.883 | 5.106 |

4. Mischungsserie

Hierzu werden in einem Laborinnenmischer gemäß nachfolgender Rezepturen die Mischungskomponenten in der angegebenen Reihenfolge 4 Min. bei 140°C gemischt:

| Mischungs-Nr.: | 16 | 17 | 18 | 19 | 20 |
|---|---|---|---|---|---|
| TSR 5, Defo 700 | 25 | 25 | 25 | 25 | 25 |
| Gel (11)/NR-Masterbatch (50/50) | 150 | | | | |
| Gel (12)/NR-Masterbatch (50/50) | | 150 | | | |
| Gel (13)/NR-Masterbatch (50/50) | | | 150 | | |
| Gel (14)/NR-Masterbatch (50/50) | | | | 150 | |
| Gel (15)/NR-Masterbatch (50/50) | | | | | 150 |
| Antilux 654 | 1,5 | 1,5 | 1,5 | 1,5 | 1,5 |
| Stearinsäure | 3 | 3 | 3 | 3 | 3 |
| Zinkoxid | 3 | 3 | 3 | 3 | 3 |
| Vulkanox 4010 NA | 1 | 1 | 1 | 1 | 1 |
| Vulkanox HS | 1 | 1 | 1 | 1 | 1 |
| Si 69 | 6 | 6 | 6 | 6 | 6 |

Nach dem Ausstoßen aus dem Innenmischer werden Schwefel und Beschleuniger auf einer auf 40°C vorgeheizten Walze zugemischt, wobei die Mischguttemperatur am Ende der Mischzeit ca. 70°C beträgt.

| Mischungs-Nr. | 16 | 17 | 18 | 19 | 20 |
|---|---|---|---|---|---|
| Schwefel | 1 | 1 | 1 | 1 | 1 |
| Vulkacit NZ | 2 | 2 | 2 | 2 | 2 |
| Vulkacit D | 0,5 | 0,5 | 0,5 | 0,5 | 0,5 |

Nach dem Mischen werden die Compoundviskositäten bei 100°C ML 1+4 und die Mooneyrelaxation bestimmt:

| Mischungs-Nr.: | 16 | 17 | 18 | 19 | 20 |
|---|---|---|---|---|---|
| ML 1+4/100°C[ME] | 39,2 | 43,2 | 39,5 | 40,5 | 41,1 |
| MR 30[%] | 4,3 | 4,4 | 3,8 | 3,8 | 5,1 |

Die Vulkansiationsgeschwindigkeiten der Mischungen werden in einem Rheometerexperiment bei 160°C untersucht Auf diese Weise werden charakteristische Heizzeiten wie z.B. $t_{95}$ bestimmt. Für die Herstellung der Vulkanisate wird als Vulkanisationszeit $t_{95+5}$ gewählt:

| Mischungs-Nr.: | 16 | 17 | 18 | 19 | 20 |
|---|---|---|---|---|---|
| Vulkanisationszeit t 95+5 [min] | 20,5 | 22,3 | 18,5 | 17,7 | 18,5 |

Auf der Basis o.g. Compounds werden folgende Prüfergebnisse erhalten:

| Mischungs-Nr.: | 16 | 17 | 18 | 19 | 20 |
|---|---|---|---|---|---|
| Zugfestigkeit [MPa] | 21,2 | 23,2 | 16,6 | 19,6 | 20,8 |
| Bruchdehnung [%] | 420 | 438 | 395 | 455 | 428 |
| Spannungswert bei 100 % Dehnung [MPa] | 3,2 | 3,3 | 2,2 | 2,7 | 3,1 |
| Spannungswert bei 300 % Dehnung [MPa] | 14,5 | 14,5 | 12,2 | 12,7 | 14,1 |
| Härte Shore A, 23 °C | 71 | 72 | 59 | 64 | 70 |
| Härte Shore A, 70 °C | 65 | 66 | 58 | 60 | 64 |
| Rückprallelastizität, 23 °C [%] | 42 | 38 | 51 | 49 | 46 |
| Rückprallelastizität, 70 °C [%] | 61 | 58 | 73 | 70 | 64 |
| Abrieb/40 DIN 53516 [mm3] | 244 | 207 | 322 | 253 | 201 |
| Abrieb/60 DIN 53516 [mm3] | 133 | 119 | 186 | 146 | 131 |
| $E_{70}$-$E_{23}$ [%] | 19 | 20 | 22 | 21 | 18 |
| $S_{300}$ x D [Mpa x %] | 6.090 | 6.351 | 4.819 | 5.779 | 6.035 |

## Patentansprüche

1. Kautschukmischungen enthaltend mindestens ein anorganische Füllstoffe enthaltendes agglomeriertes Kautschukgel (A), mindestens einen doppelbindungshaltigen Kautschuk (B) und mindestens eine schwefelhaltige Organosiliciumverbindungen (C), wobei der Anteil an doppelbindungshaltigem Kautschuk (B) 100 Gew.-Teile, der Anteil an Kautschukgel (A) 1 bis 150 Gew.-Teile und der Anteil an siliciumorganischer Schwefelverbindung (C) 0,2 bis 20 beträgt, und wobei der Teilchendurchmesser der agglomerierten Kautschukgele (A) im Bereich von 5 bis 5000 nm liegt und die Teilchengrößenverteilung durch eine Differenz von $d_{80}$-$d_{10}$ von größer 25 nm definiert ist, sowie weiteren Kautschukhilfsmitteln und gegebenenfalls weiteren Füllstoffen.

2. Mischungen nach Anspruch 1, **dadurch gekennzeichnet, daß** das agglomerierte Kautschukgel aus BR, NR-, NBR-, CR- oder SBR-Mikrogelen besteht.

3. Agglomerierte Kautschukgele nach Anspruch1, **dadurch gekennzeichnet, dass** sie aufgrund ihrer Vernetzung unlöslich und in Toluol quellbar sind, wobei die Quellungsindizes der Mikrogele ($Q_i$) in Toluol im Bereich von 1 bis 15 liegen.

4. Verwendung der Kautschukmischungen nach Anspruch 1 zur Herstellung von Gummiartikeln, insbesondere von dynamisch belasteten Artikeln, wie Reifenbauteile, Dämpfungselemente, Riemen und Transportbänder.

## Claims

1. Rubber mixtures comprising at least one agglomerated rubber gel (A) which comprises inorganic fillers, and comprising at least one rubber (B) containing one or more double bonds and at least one sulphur-containing organosilicon compound (C), where the proportion of rubber (B) containing one or more double bonds is 100 parts by weight, the proportion of rubber gel (A) is from 1 to 150 parts by weight and the proportion of organosilicon sulphur compound (C) is from 0.2 to 20 parts by weight, and where the particle diameter of the agglomerated rubber gels (A) is in the range from 5 to 5000 nm and the particle size distribution is defined by a $d_{80}$-$d_{10}$ difference greater than 25 nm and also other rubber auxiliaries and, where appropriate, other fillers.

2. Mixtures according to Claim 1, **characterized in that** the agglomerated rubber gel is composed of BR, NR microgels, NBR microgels, CR microgels or SBR microgels.

3. Agglomerated rubber gels according to Claim 1, **characterized in that** their crosslinking makes them insoluble and toluene-swellable, the swelling indices of the microgels ($Q_I$) in toluene being in the range from 1 to 15,

4. Use of the rubber mixtures according to Claim 1 for producing rubber items, in particular items subject to dynamic load, for example tyre components, damping elements, and belts, including conveyor belts.

## Revendications

1. Mélanges de caoutchouc contenant au moins un gel de caoutchouc aggloméré (A), contenant le cas échéant des charges inorganiques, au moins un caoutchouc contenant des doubles liaisons (B) et au moins un composé organosilicié contenant du soufre (C), la proportion de caoutchouc contenant des doubles liaisons (B) étant de 100 parties en poids, la proportion de gel de caoutchouc (A) étant de 1 à 150 parties en poids et la proportion de composé soufré organosilicié (C) étant de 0,2 à 20 parties en poids, le diamètre des particules des gels de caoutchouc agglomérés (A) se situant dans la plage de 5 à 5000 nm et la répartition granulométrique étant définie par une différence de $d_{80}$-$d_{10}$ supérieure à 25 nm, ainsi que d'autres adjuvants de caoutchouc et le cas échéant d'autres charges.

2. Mélanges selon la revendication 1, **caractérisés en ce que** le gel de caoutchouc aggloméré est constitué par du BR, des microgels de NR, NBR, CR ou SBR.

3. Gels de caoutchouc agglomérés selon la revendication 1, **caractérisés en ce qu'**ils sont insolubles en raison de leur réticulation et gonflables dans du toluène, les indices de gonflement des microgels ($Q_i$) dans le toluène étant situés dans la plage de 1 à 15.

4. Utilisation des mélanges de caoutchouc selon la revendication 1 pour la fabrication d'objets en caoutchouc, en particulier d'objets sollicités dynamiquement, tels que les pièces de pneumatiques, les éléments amortisseurs, les courroies et les bandes transporteuses.